# EUROPÄISCHE PATENTSCHRIFT

(11) **EP 3 208 450 B1**
(45) Veröffentlichungstag und Bekanntmachung des Hinweises auf die Patenterteilung: **06.01.2021**
(21) Anmeldenummer: 17154095.8
(22) Anmeldetag: 01.02.2017
(51) Int. Cl.: F02D 41/02, F02D 41/00, F02D 41/14

(54) **VERFAHREN ZUM BETREIBEN EINER VERBRENNUNGSKRAFTMASCHINE UND DREIZYLINDERMOTOR ZUM AUSFÜHREN EINES SOLCHEN VERFAHRENS**
METHOD FOR OPERATING A COMBUSTION ENGINE AND THREE-CYLINDER ENGINE FOR CARRYING OUT SUCH A METHOD
PROCÉDÉ DE FONCTIONNEMENT D'UN MOTEUR À COMBUSTION INTERNE ET MOTEUR À TROIS CYLINDRES DESTINÉ À EXÉCUTER LEDIT PROCÉDÉ

(30) Priorität: 16.02.2016 DE 102016202351
(43) Veröffentlichungstag der Anmeldung: 23.08.2017
(73) Patentinhaber: VOLKSWAGEN AKTIENGESELLSCHAFT, 38440 Wolfsburg (DE)
(72) Erfinder: Fladung, Oliver, 38122 Braunschweig (DE); Worm, Jörg, 38118 Braunschweig (DE); Radloff, Rainer, 38173 Sickte (DE); Kirschke, Frank, 38162 Cremlingen (DE); Bastug, Mustafa, 12057 Berlin (DE)

(56) Entgegenhaltungen:
- DE-A1-102012 003 310
- US-A- 5 357 928
- US-A1- 2004 187 481
- US-A1- 2011 265 762
- US-B1- 6 325 056
- US-B1- 7 886 523

## Beschreibung

Die Erfindung betrifft ein Verfahren zum Betreiben einer mit Erdgas betriebenen Verbrennungskraftmaschine mit einer Abgasreinigungsanlage, die einen Katalysator umfasst, sowie einen entsprechenden Dreizylindermotor.

Es ist bekannt, die Abgase von Verbrennungskraftmaschinen (Mehrzylindermotoren) mit Hilfe von Abgaskatalysatoren zu reinigen. In Abgaskatalysatoren wird ein Katalysatorträger, der eine katalytische Beschichtung aufweist vom im Betrieb aus den einzelnen Zylindern ausgestoßenen Abgasen durchströmt. Dabei werden verschiedene Abgasschadstoffe katalytisch unterstützt zu weniger schädlichen Komponenten konvertiert.

Bei Gasmotoren wird dabei typischerweise ein Dreiwegekatalysator eingesetzt, der die Aufgabe hat, die bei der Verbrennung entstehenden Schadstoffe HC (Kohlenwasserstoffe), CO (Kohlenmonoxid) und NOₓ (Stickoxide) in die ungiftigen Bestandteile H₂O (Wasserdampf), CO₂ (Kohlendioxid) und N₂ (Stickstoff) umzuwandeln. Dabei sind katalytisch wirksame Schichten aus Edelmetallen wie Platin oder Palladium vorgesehen, welche die Oxidation von HC und CO beschleunigen, sowie Schichten aus Rhodium, welche die Reduktion von NOₓ beschleunigen. Es gibt auch Katalysatorkonzepte, bei denen in den Katalysatoren bzw. im Katalysator Speicherkomponenten für Sauerstoff, Stickoxide, Kohlenwasserstoffe enthalten sind.

Alle Katalysatoren erreichen eine nennenwerte Umsetzung von Substanzen, wenn sie eine bestimmte Betriebstemperatur erreicht haben, die Anspringtemperatur oder Light-Off-Temperatur, die bei gegenwärtigen Dreiwegekatalysatoren für die Konvertierung von CO mindestens 250°C beträgt.

Unter dem Eindruck immer strengerer Abgasvorschriften, die insbesondere auch im Hinblick auf den zulässigen CO2-Ausstoß immer restriktiver werden, bieten Gasmotoren, die mit Erdgas (auch CNG oder Compressed Natural Gas) und LNG betrieben werden, ein sehr hohes Einsparungspotential gegenüber Benzinmotoren. Neben der praktisch partikelfreien Verbrennung in solchen Motoren und der reduzierten CO2-Emission, sind mit geregelten Dreiwegekatalysatoren die Schadstoffemissionen NOx, CH und HC (gegenüber einem Benzinbetrieb) herabgesetzt.

Neben einer höheren Edelmetallbeladung bei solchen Katalysatoren ist zur Konvertierung der HC-Emissionen, die weitgehend aus dem chemisch relativ stabilen Methan bestehen, beim Erdgasbetrieb eine erhöhte Light-Off-Temperatur erforderlich. Die Zersetzung des an sich nicht toxischen Methans wird wegen seiner hohen Klimawirksamkeit zunehmend gefordert. Die theoretische Light-Off-Temperatur der Methankonvertierung in einem gegenwärtigen Dreiwegekatalysator liegt bei ca. 500°C.

Bei kleinvolumigen, stöchiometrisch betriebenen Dreizylinder-CNG-Aggregaten, die gegebenenfalls auch turboaufgeladen sind, ist diese theoretische Light-Off-Temperatur im unteren Teillastbetrieb nicht erreichbar. Im Abgasturbolader wird dem Abgas weitere Energie entzogen, so dass gegebenenfalls die notwendige Light-Off-Temperatur hier nicht erreicht werden kann.

Damit sind für bestimmte Betriebszustände Heiz- bzw. Warmhaltestrategien erforderlich, um den Katalysator auf die erforderliche Temperatur zu bringen bzw. diese zu halten. Dabei sind z.T. konkurrierende Anforderungen wie hoher Fahrkomfort (Laufruhe), geringer Schadstoffausstoß, hoher Wirkungsgrad im Betrieb und günstige Realisierung zu erfüllen.

Geeignete konventionelle Heiz- und Warmhaltestrategien für solche Motoren sind beispielsweise die Sekundärlufteinblasung, bei der eine zusätzliche Luftpumpe und Ventile erforderlich sind, die den Abgasen zusätzlichen Luftsauerstoff zuführen, um durch thermische Nachverbrennung von unverbrannten Kraftstoffbestandteilen die Temperatur im Abgassystem zu erhöhen. Dies erfordert jedoch zusätzliche Aggregate und Steuerungsaufwand.

Auch elektrische Zusatzheizungen für Katalysatoren oder Katalysatorberreiche sind bekannt. Jedoch erfordern auch diese zusätzliche Komponenten.

Eine weitere bekannte Maßnahme zur Kontrolle des Abgaswärmestroms ist die Zündwinkelverstellung in Richtung spät. Die späte Einleitung der Verbrennung im Zylinder führt zu Abgasen, die mit einer relativ hohen Temperatur ausgestoßen werden. Dies hat jedoch zum einen den Nachteil, dass der CO₂-Ausstoß erhöht wird und zum anderen den, dass die Laufruhe eines solchen Aggregates negativ beeinflusst wir. Denn durch die Verlagerung des Großteils der Verbrennung in den Expansionstakt werden zyklische Verbrennungsschwankungen erhöht.

Weitere Maßnahmen können in der Erhöhung der Leerlaufdrehzahl bestehen, welche eine stärkere Spätverstellung des Zündwinkels erlaubt, aber nur eine begrenzte Heizleistung liefert, die unter Umständen nicht ausreicht, um die notwendige Light-Off-Temperatur des Katalysators zu erreichen oder zu halten.

In der DE 102 619 112 A1 ist ein Verfahren zur Steuerung der Temperatur eines in einer Abgasreinigungsanlage angeordneten Katalysators dargestellt, bei dem Energie mittels eines sogenannten Lambdasplits in die Abgasreinigungsanlage einbringbar ist. Dabei wird für einen Vierzylindermotor ausgeführt, dass bei einem gewünschten Gesamtabgaslambda von 1,0 vor dem Hauptkatalysator zwei Teilabgasströme mit erhöhtem und zwei mit herabherabgesetztem Lambdawert zusammengeführt werden. In einem der beiden beaufschlagten Abgaspfade aus zwei Zylindern ist der Abgaslambdawert um einen vorgegebenen Betrag in Richtung "fett" verstellt- zwei Zylinder werden z.B. mit einem Lambda von 0,75 betrieben - und in dem anderen Abgaspfad der beiden anderen Zylinder in entsprechender Weise in Richtung "mager" -zwei Zylinder werden mit einem Lambda von 1,25 betrieben. Das so gewonnene Mischabgas hat vor dem Katalysator gleichzeitig eine hohe Sauerstoff- und CO-Konzentration, so dass im bzw. am Katalysator eine hohe Umsetzung dieser chemisch gebundenen Energie stattfindet, die in Wärme umgewandelt wird und den Katalysator soweit erwärmt, dass die gewünschten Betriebstemperaturen (Light-Off-Temperaturen) zur Konvertierung aller Abgaskomponenten eingehalten werden können.

Ein ähnlicher Ansatz ist der DE 10 2012 003 310 A1 zu entnehmen. Hier ist das Lambdasplitverfahren Bestandteil eines zweiphasigen Heizvorgangs, bei dem zunächst ein Teilabschnitt des Katalysators mit einer ersten Heizmaßnahme erwärmt wird (insbesondere durch eine Verstellung des Zündwinkels in Richtung spät) und anschließend in einer zweiten Phase mit dem oben beschriebenen Lambdasplitverfahren.

In der US 2011/0265762 A1 werden ein oder mehrere Zylinder für eine Dauer abwechselnd fett und mager betrieben, um eine thermische Belastung des Motors zu reduzieren und gleichzeitig ein ungefähr stöchiometrisches Abgas-/Kraftstoffverhältnis aufrechtzuerhalten.

Die bekannten Lambdasplitverfahren sind jedoch für den Betrieb eines CNG-DreizylinderMotors nur bedingt geeignet, da sie von einem im Wesentlichen symmetrischen Lambdasplit (bzw. einer symmetrischen Vertrimmung) der zylinder-individuellen Luftverhältnisse unter der Bedingung eines global-stöchiometrischen Gemisches ausgehen. Ein stöchiometrischer Betrieb einer Abgasanlage ist aber damit bei einem Dreizylindermotor nicht möglich, da der Abgasstrom bei einem symmetrischen Lambdasplit insgesamt entweder zu "fett" oder zu "mager" ist.

Auch der Umstand, dass Erdgas (CNG) eine schlechtere Fett-Lauffähigkeit als MagerLauffähigkeit aufweist - die zyklischen Verbrennungsschwankungen nehmen in Richtung eines fetteren Gemisches stärker zu als in Richtung eines mageren Gemisches - bleibt bei den bekannten Verfahren unberücksichtigt. Dadurch wird bei einem Betrieb nach den herkömmlichen Verfahren die ohnehin herabgesetzte Laufruhe bei Dreizylinderaggregaten (im Gegensatz zu Vier- oder mehr-zylindrischen Motoren) weiter beeinträchtigt.

Aufgabe der vorliegenden Erfindung ist es daher, ein Verfahren zum Betreiben einer mit Erdgas betriebenen Verbrennungskraftmaschine bereitzustellen, bei dem die vorgenannten Nachteile wenigstens teilweise überwunden werden.

Eine weitere Aufgabe besteht darin, einen für das erfindungsgemäße Verfahren geeigneten CNG-Dreizylindermotor bereitzustellen.

Diese Aufgabe wird durch das erfindungsgemäße Verfahren nach Anspruch 1 und den CNG-Dreizylindermotor nach Anspruch 11 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Das erfindungsgemäße Verfahren umfasst:
Bereitstellen eines Dreizylindermotors mit einem ersten und zwei zweiten Zylindern, Einstellen eines Lambdasplits mit Einstellen eines ersten und eines zweiten Lambdawertes eines zylinderweise zugeführten Luft-Kraftstoffgemisches über die Dosierung der Kraftstoffzufuhr und zeichnet sich dadurch aus, dass der Dreizylindermotor mit einem unsymmetrischen Lambdasplit betrieben wird, bei dem der erste Zylinder mit einem mageren Luft-Kraftstoffgemisch, also mit einem Luftüberschuss (überstöchiometrisch Lambda > 1) betrieben wird, so dass der nach der Verbrennung ausgestoßene Abgasstrom ebenfalls einen überstöchiometrischen ersten Abgaslambdawert aufweist, und die beiden zweiten Zylinder mit einem fetten Luft-Kraftstoffgemisch, also mit einem Luftmangel (unterstöchiometrisch, Lambda < 1) betrieben werden, so dass ein zweiter Abgasstrom, der jeweils aus den beiden zweiten Zylinder ausgestoßen wird, ebenfalls einen unterstöchiometrischen Abgaslambdawert aufweist.

Dabei werden der überstöchiometrische Abgaslambdawert im ersten Abgasstrom und der unterstöchiometrische Abgaslambdawert in den beiden zweiten Abgasströmen unsymmetrisch so eingestellt, dass in einem Gesamtabgasstrom Luftsauerstoff aus dem ersten Zylinder bzw. aus dem ersten Abgasstrom und unverbrannter Kraftstoff bzw. oxidierbare und/oder reduzierbare Abgasschadstoffe aus den zweiten Zylindern in einem weitgehend stöchiometrischen Verhältnis (Lambda = 1) zur Verfügung stehen, so dass sie im Katalysator vollständig exotherm miteinander reagieren und diesen erwärmen.

Diese speziell auf einen CNG-Dreizylindermotor abgestimmte Lambdasplitstrategie zur zusätzlichen Erwärmung des Katalysators nutzt die besonders gute Magerlauffähigkeit des Erdgases bzw. berücksichtigt die schlechtere Fettlauffähigkeit, um zyklische Verbrennungschwankungen bei fetteren Zündgemischen zu reduzieren.

Dadurch dass im Gesamtabgasstrom weitgehend stöchiometrische Verhältnisse herrschen müssen (Lambda nahe oder gleich 1), um eine optimale exotherme Reaktion im Katalysator zu ermöglichen, muss die Abmagerung im ersten Zylinder stärker sein, als die Anfettung in den beiden zweiten Zylindern. Der Lambdasplit ist also unsymmetrisch. Es steht also in einem Arbeitszyklus des Motors, in dem jeder der drei Zylinder einmal betrieben wird, von den drei erzeugten Abgasströmen ein erster Abgasstrom aus dem ersten Zylinder zur Verfügung, der relativ stärker abgemagert ist und jeweils zwei Abgasströme aus den beiden zweiten Zylindern zur Verfügung, die entsprechend relativ schwächer angefettet sein können, so dass im Betrieb dieser beiden Zylinder keine Verbrennungsschwankungen und damit keine verstärkte Laufunruhe erzeugt werden. Die entsprechend verstärkte Abmagerung des Luft-Kraftstoffgemisches im ersten Zylinder ist wegen der erhöhten Magerlauffähigkeit des Erdgases unproblematisch. Dieser Effekt prädestiniert die oben dargestellte unsymmetrische Lambdasplitstrategie für die zusätzliche Erwärmung des Katalysators in der Abgasanlage eines CNG-Dreizylindermotors.

Darüber hinaus liegt ein weiterer Vorteil des Lambdasplitbetriebes darin, dass die Wärme zur Warmhaltung des Katalysators direkt im Katalysator selbst generiert wird. Der überschüssige Sauerstoff des magerlaufenden Zylinders geht mit den Abgas-/Kraftstoffkomponenten der beiden fettlaufenden Zylinder erst im Drei-Wege-Katalysator eine exotherme Reaktion ein.

In einer weiteren Ausführung des Verfahrens ist vorgesehen, die Katalysatortemperatur mittels einer kontrollierbaren Zufuhr chemisch gebundener Energie im Gesamtabgasstrom durch Einstellen (Variieren) des Lambdasplits zu kontrollieren, indem nämlich der erste Lambdawert im mageren Luft-Kraftstoffgemisch und/oder der zweite Lambdawert im fetten Luft-Kraftstoffgemisch entsprechend verändert wird, um die gewünschte Energiezufuhr einzustellen. Dies ist in einem Gasmotor sehr einfach durch Steuerung der Einblaszeiten an den jeweiligen Einblasdüsen möglich. Während die Luftzufuhr über die Saugrohre mehr oder weniger global (ggf. lastabhängig) für alle Zylinder gleich ist, wird der jeweilige Zylinder-individuelle Lambdawert über die Einblaszeit des Gases an den Einblasdüsen gesteuert.

Es gibt auch Verfahren, bei denen vorgesehen ist, die Katalysatortemperatur zu kontrollieren, indem der Dreizylindermotor intervallweise im Lambdasplitbetrieb und in einem Normalbetrieb ohne Lambdasplit (also mit einem stöchiometrischen - oder wahlweise auch mageren -Luft-Kraftstoffgemisch in allen Zylindern) betrieben wird. Dauer und Frequenz der Betriebsintervalle im Lambdasplitbetrieb und der im Normalbetrieb sind dabei so aufeinander abgestimmt, dass eine Light-Off-Temperatur der Kohlenmonoxid-Konvertierung, insbesondere eine untere Grenze bei 250°C, und/oder die der Methankonvertierung, insbesondere eine untere Grenze von 500°C, im Betrieb nicht unterschritten werden.

In einem weiteren Verfahren ist vorgesehen, den Wert einer ersten Lambdawertspreizung des ersten Lambdawertes und den Wert einer zweiten Lambdaspreizung des zweiten Lambdawertes so einzustellen, dass der Wert der ersten Lamdbaspreizung betragsmäßig doppelt so groß ist, wie der Wert der zweiten Lambdaspreizung. Lambdaspreizung bedeutet in diesem Zusammenhang die Abweichung des Lambdawertes vom stöchiometrischen Lambdawert 1. Das bedeutet bspw. dass eine erste Lambdaspreizung in Höhe von 25%, z.B. ein Lambdawert von 1,25 bei Luftüberschuss zusammen mit einer zweiten Lambdaspreizung von 12,5% also bspw. einem Lambdawert von 0,875 kombiniert wird. Damit wird der erste Zylinder mit der ersten Lambdaspreizung betrieben, während die beiden zweiten Zylinder jeweils mit der zweiten Lambdaspreizung betrieben werden, die jeweils halb so groß ist, wie die der ersten Lambdaspreizung. Damit lässt sich die Kraftstoffzufuhr besonders einfach abstimmen.

Das Verfahren wird ausgeführt, indem der Zylinder mit einem mageren Luft-Kraftstoffgemisch und die beiden Zylinder mit einem fetten Luft-Kraftstoffgemisch rollierend betrieben werden. Das bedeutet bspw., dass ein erster Zylinder zunächst mit einem mageren Luft-Kraftstoffgemisch betrieben wird und anschließend mit einem fetten Luft-Kraftstoffgemisch und der zweite mit einem mageren Luft-Kraftstoffgemisch und anschließend der dritte Zylinder mit einem mageren Luft-Kraftstoffgemisch und die beiden anderen Zylinder wiederum mit einem fetten Luft-Kraftstoffgemisch. So eine Betriebsweise ohne feste Zylinderzuordnung zu bestimmten Lambdawerten kann vorteilhaft sein, um eine gleichmäßige thermische und chemische Beanspruchung der einzelnen Zylinder zu gewährleisten.

In einer weiteren Verfahrensvariante kann vorgesehen sein, dass der erste und die zweiten Lambdawerte in Abhängigkeit von wenigstens einer der folgenden Größen eingestellt werden: Katalysatortemperatur, Katalysatortemperaturänderungsrate, Motorlast, Abgasmassestrom, Verbrennungsaussetzerrate, Laufruhe. Damit können unterschiedliche Betriebszustände des Motors und insbesondere auch des Katalysators bzw. der Abgasreinigungsanlage berücksichtigt werden. Weitere Kriterien können auch das Alter des Katalysators oder Ähnliches sein.

Das Verfahren kann auch dahingehend ausgelegt sein, dass diese Einstellung des ersten und oder des zweiten Lambdawertes auf der Grundlage eines oder mehrerer Kennfelder erfolgt, in denen entsprechende Größen (s.o.) hinterlegt sind.

Um die Funktionssicherheit des Katalysators zu gewährleisten, kann in einer weiteren Verfahrensvariante der Mischlambdawert im Gesamtabgasstrom mit Hilfe einer ersten Lambdasonde im Einlassbereich des Katalysators und/oder einer zweiten Lambdasonde im Auslassbereich des Katalysators regelbar sein. Durch diese Maßnahme ist sichergestellt, dass der Katalysator zuverlässig im stöchiometrischen Bereich betrieben wird. So eine Zwei-Sonden-Regelung hat den Vorteil, dass die Sprung-(Zweipunkt-) Regelung oder die stetige Lambdaregelung vor dem Katalysator über eine zusätzliche Lambdasonde hinter dem Katalysator zur Kontrolle durch eine weitere Regelschleife überlagert wird. Auf dieser Grundlage wird die Abweichung vom Sollwert ausgewertet, und die Fett- oder Magerverschiebung der ersten Regelschleife (Lambdasonde vor dem Katalysator) wird über den Sollwert der zweiten Lambdasonde zusätzlich additiv verändert.

Dabei haben sich Ausführungen bewährt, bei denen die erste Lambdasonde (vor dem Katalysator) als Breitbandsonde und die zweite Lambdasonde (nach dem Katalysator) als Sprungsonde ausgebildet sind. Mit einer sogenannten Breitbandlambdasonde lässt sich eine kontinuierliche Regelung für Lambda = 1 mit stationär kleiner Amplitude in Verbindung mit hoher Dynamik erreichen. Die Regelungsparameter werden entsprechend den Betriebspunkten des Motors berechnet und angepasst. Breitbandlambdasonden sind insbesondere auch geeignet, eine globale geregelte Anfettung bzw. Abmagerung zu realisieren. Sprungsonden oder Zweipunktlambdasonden zeigen dagegen sehr sensibel einen Wechsel von fett nach mager bzw. von mager nach fett.

Die Erfindung betrifft weiterhin einen CNG-Dreizylindermotor, insbesondere einen magerlauffähigen CNG-Dreizylindermortor, mit einer lambdasplitfähigen Abgasreinigungsanlage, die einen Katalysator umfasst, wobei Mittel vorgesehen sind, die dazu eingerichtet sind, den Motor nach dem Verfahren nach einem der Ansprüche 1 bi 11 zu betreiben. So ein Motor kann kleinvolumig und mit vergleichsweise hohen Drehzahlen realisiert werden und ist damit durch die reduzierte innere Reibung für verbrauchsoptimierte Anwendungen prädestiniert.

Die Mittel umfassen dabei die für eine Erdgasmotorsteuerung erforderlichen Komponenten wie z.B.: ein Motorsteuergerät (ECU), welches die Einblasmengen über zeitgesteuerte Erdgaseinblasventile steuert, die bereits angesprochenen Lambdasonden vor und nach dem Katalysator, Temperatursensoren im oder am Katalysator bzw. in einem Gasrail, aus dem die Gaseinblasventile gespeist werden.

Dabei gibt es Ausführungen, bei welchen der Motor als Reihenmotor ausgebildet ist und der erste Zylinder, der vornehmlich für den Magerbetrieb vorgesehen ist, zwischen den beiden zweiten Zylindern angeordnet ist. Durch diese Anordnung lassen sich die Querbeeinflussungen bei der Kraftstoffgemischzufuhr minimieren, die insbesondere bei Dreizylindermotoren eine Rolle spielen.

In anderen Ausführungen kann jedoch auch einer der äußeren Zylinder für den Magerbetrieb vorgesehen werden.

Dabei gibt es Ausführungen, bei denen die Abgaspfade in einen gemeinsamen Abgasturbolader münden, der vor dem Katalysator angeordnet ist. Dies ist bei Downsizing-Konzepten, die mit kleinvolumigen Dreizylindermotoren verfolgt werden, vorteilhaft.

Neben den oben beschriebenen Merkmalen kann ergänzend bzw. alternativ auch noch Folgendes vorgesehen werden:
Es gibt auch Ausführungen, in denen jeder der Zylinder mit einem individuellen Lambdawert (also der Motor mit drei unterschiedlichen Lambdawerten) betrieben wird und trotzdem insgesamt eine stöchiometrische Abgaszusammensetzung erreicht wird. Dabei kann auch vorgesehen werden, dass diese individuellen Lambdawerte rollierend an den unterschiedlichen Zylindern realisiert werden.

Weiter lassen sich die oben beschriebenen Konzepte und Merkmale auch an Motoren mit gerader Zylinderanzahl oder mehrzylindrigen Motoren mit ungerader Zylinderanzahl (z.B. fünf, sieben oder neun) realisieren.

Ausführungsbeispiele der Erfindung werden nun beispielhaft, schematisch und unter Bezugnahme auf die beigefügten Zeichnungen beschrieben. Darin zeigt
- Fig. 1: eine schematische Darstellung mit einem Ausführungsbeispiel eines erfindungsgemäßen CNG-Dreizylindermotors;
- Fig. 2: eine schematische Darstellung eines erfindungsgemäßen Verfahrens und
- Fig. 3: ein Beispiel für einen rollierenden Lambdasplitwechsel zwischen den einzelnen Zylindern.

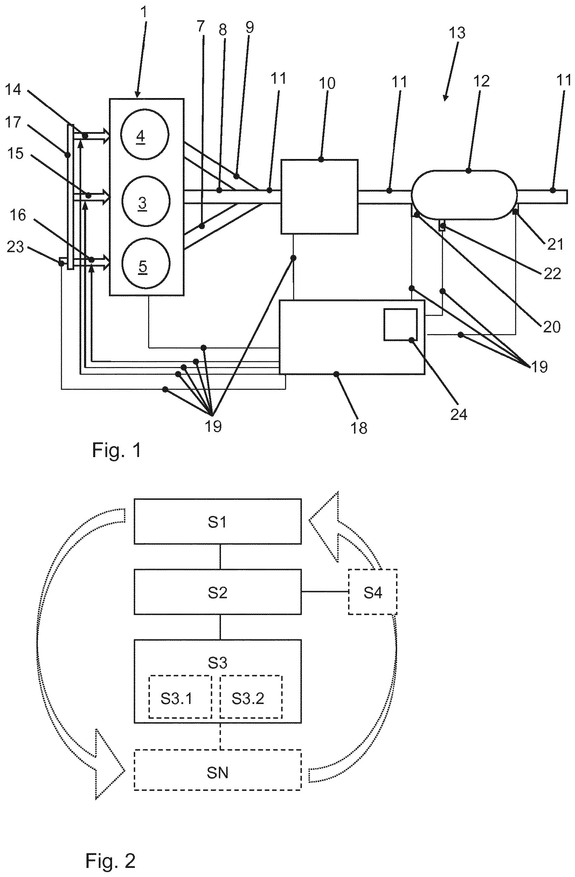

Aufbau und Funktion einer Ausführungsform eines erfindungsgemäßen Motors werden nun anhand der Figur 1 erläutert. Der Motor 1 ist als Drei-Zylinder-Reihenmotor ausgebildet und umfasst drei Zylinder 3, 4, und 5. Jeder der Zylinder mündet in einen Abgaspfad 7, 8, 9, die vor einem optionalen Turbolader 10 in einem gemeinsamen Abgaspfad 11 zusammenlaufen, der durch den Turbolader 10, einen Katalysator 12 und weiter in einen nicht dargestellten Abgaspfadbereich führt.

Die Abgaspfade 7, 8, 9 und 10, sowie der Katalysator 12 bilden gemeinsam eine Abgasreinigungsanlage 13.

Die Zylinder 3, 4 und 5 werden mit einem Luft-Kraftstoffgemisch versorgt. Über Einblasventile 14, 15, 16 wird Kraftstoff (Gas) zugeführt, der mit Überdruck über ein Gasrail 17 bereitgestellt wird, das aus einem (nicht dargestellten) Gasspeicher gespeist wird. Das Einblasen des Kraftstoffes erfolgt über den Einblasventilen 14, 15, 16 in den Zylindern 3, 4, und 5 vorgelagerte Saugrohre (nicht dargestellt).

Der Motor 1 kann als bivalenter Motor ausgebildet sein, d.h. er kann auch mit Ottokraftstoff betrieben werden, der dann alternativ über zusätzliche Einspritzventile in die Saugrohre oder über Einspritzinjektoren direkt in die Zylinder, eingespritzt wird. Ein solcher Motor 1 kann auch in einem sogenannten "Monovalent-Plus-Fahrzeug" eingesetzt werden, bei dem der Motor 1 für den Gasbetrieb (Erdgas, CNG) optimiert ist, um alle günstigen Eigenschaften von Erdgas (höhere Klopffestigkeit, geringere CO₂- und Schadstoffemissionen) optimal nutzen zu können. Bei solchen Fahrzeugen ist nur noch ein relativ kleiner Benzintank vorgesehen, um das Weiterfahren in einem Not- oder Reservebenzinbetrieb zu ermöglichen, falls nicht genügend Gaskraftstoff zur Verfügung stehen sollte.

Weiter verfügt der Motor über Mittel, die einen sogenannten Lambdasplitbetrieb ermöglichen. Diese Mittel umfassen ein Motorsteuergerät (ECU) 18, welches über Signalleitungen 19 mit dem Motor, den Einblasventilen 14, 15, 16, einer ersten Lambdasonde 20, die im Eingangsbereich des Katalysators 12 angeordnet ist, einer zweiten Lambdasonde 21, die in einem Auslassbereich des Katalysators 12 angeordnet ist, und einem Katalysatortemperaturfühler 22 verbunden ist.

Das Motorsteuergerät 18 ist ebenfalls über Signalleitungen 19 mit den Einblasventilen 14, 15, 16 und einem Drucktemperaturfühler 23 am Gasrail 17 verbunden. Das Motorsteuergerät 18 verfügt weiter über Speichermittel 24, in denen die erforderlichen Werte, Kennfelder und weitere Daten und Programme zum Betrieb des Motors 1 und der Abgasreinigungsanlage 13 verfügbar sind.

In einem Normalbetrieb wird der Motor 1 in bekannter Weise betrieben, indem über die Einblasventile 14, 15, 16 und die Saugrohre (nicht dargestellt) das Luftgasgemisch den Zylindern 3, 4, und 5 zugeführt wird. Dort wird die chemische Energie in Bewegungsenergie umgesetzt. Die Abgase werden über die Abgaspfade 7, 8, 9 und 11 aus den Zylindern durch einen optionalen Turbolader 10 geführt und vorhandene Schadstoffe werden im Katalysator 12 weitgehend in unschädliche Bestandteile umgewandelt. In diesem Normalbetrieb werden alle Zylinder im stöchiometrischen oder abgemagerten Bereich betrieben, so dass ein optimaler Katalysatorbetrieb möglich ist. Die Steuerung und Regelung erfolgt dabei u.a. anhand der Signale aus den Lambdasonden 20 und 21, dem Katalysatortemperaturfühler 22 sowie dem Drucktemperaturfühler 23. Die Motorsteuerung 18 stellt entsprechend geeignete Einblaszeiten der Einblasventile 14, 15, 16 und gegebenenfalls Ventilsteuerzeiten der Einlass- und Auslassventile (nicht dargestellt) des Motors 1 ein.

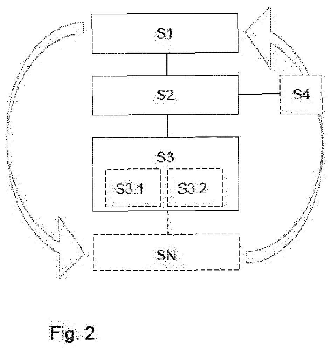

Anhand der Figur 2 wird nachfolgend das erfindungsgemäße Verfahren für den unsymmetrischen Lambdasplitbetrieb erläutert. In einem ersten Schritt wird dabei der oben beschriebene Dreizylindermotor 1 bereitgestellt (S1).

In einem zweiten Schritt (S2) wird ein sogenannter Lambdasplit eingestellt, d.h. die Lambdawerte der jeweils zylinderweise zugeführten Luft-Kraftstoffgemische werden unterschiedlich eingestellt. Im vorliegenden Fall wird ein erster Lambdawert (λ_{K1}) für den mittleren Zylinder 3 und ein anderer Lambdawert (λ_{K2}) für die beiden daneben angeordneten Zylinder 4 und 5 eingestellt. Die Lambdawerte (λ_{K1} und λ_{K2}) werden über die Steuerung der Einblasventile 14, 15, 16 und/oder der über die Einlassrohre bereitgestellten Luftmenge gesteuert.

In einem dritten Schritt (S3) wird der Motor in der Weise betrieben, dass ein unsymmetrischer Lambdasplitbetrieb realisiert wird. Dabei wird im Schritt (S3.1) der erste Zylinder mit einem mageren Luft-Kraftstoffgemisch betrieben (Lambda λ_{K1}> 1, Luftüberschuss, überstöchiometrisch), so dass ein erster Abgasstrom in den Abgaspfad 8 ausgestoßen wird, der ebenfalls einen überstöchiometrischen Abgaslambdawert λ₁ aufweist. Dagegen werden die beiden zweiten Zylinder 4 und 5 in einem Schritt (S3.2) mit einem fetten Luft-Kraftstoffgemisch (λ_{K2} < 1, Luftmangel, unterstöchiometrisch) betrieben, so dass jeweils die zweiten Abgasströme mit einem unterstöchiometrischen Abgaslambdawert λ₂ durch die Abgaspfade 7 und 9 ausgestoßen werden.

Die Variation der Lambdawerte λ_{K1} und λ_{K2} erfolgt dabei unsymmetrisch, d.h. die Abweichung vom stöchiometrischen Betrieb ist für den ersten Zylinder 3 größer als die für die beiden danebenliegenden Zylinder 4 und 5.

Dabei enthält der im Abgaspfad 11 aus den Abgaspfaden 7, 8 und 9 zusammengeführte Gesamtabgasstrom Luftsauerstoff aus dem ersten Zylinder 3 und unverbrannten Kraftstoff bzw. Schadstoffe aus den beiden zweiten Zylindern 4 und 5. Der Gesamtabgaslambdawert λ_{G} ist im Wesentlichen gleich 1, d.h. die Bestandteile stehen in einem stöchiometrischen Verhältnis zur Verfügung, so dass sie im Katalysator 12 optimal exotherm miteinander reagieren können (schadstoffreduzierende Reaktions- und Reduktionsreaktionen).

In einem weiteren optionalen Schritt (S4) wird die Temperatur des Katalysators mittels einer kontrollierbaren Zufuhr chemisch gebundener Energie im Gesamtabgasstrom durch Einstellen des Lambdasplits mittels Variation des ersten Lambdawertes λ_{K1} im mageren Luft-Kraftstoffgemisch und/oder des zweiten Lambdawertes λ_{K2} im fetten Luft-Kraftstoffgemisch erreicht. Dabei werden die Signale aus den beiden Lambdasonden 20 und 21 sowie die des Katalysatortemperaturfühlers 22 genutzt, um die zur Verfügung stehende chemisch gebundene Energie zu erhöhen oder herabzusetzen. Dies erfolgt über die Steuerung der Einblaszeiten an den Einblasventilen 14, 15, 16.

Der Lambdasplitbetrieb gemäß den Schritten S1 bis S3 kann auch mit einem Normalbetrieb abgewechselt werden, der bspw. als optionaler Schritt SN an einen Lambdasplitbetrieb angeschlossen werden kann bzw. wechselweise mit diesem ausgeführt wird. Dabei werden über die im Steuergerät 18 erfassten und ausgewerteten Signale die Dauer und Frequenz dieser Betriebsintervalle so aufeinander abgestimmt, dass zum einen eine Light-Off-Temperatur der Kohlenmonoxid-Konvertierung von ca. 250°C im Katalysator eingehalten wird und/oder die Light-Off-Temperatur der Methan-Konvertierung in Höhe von 500°C nicht unterschritten wird.

Ein einfacher, unsymmetrischer Lambdasplitbetrieb wird realisiert, indem eine Lambdaspreizung Δ λ₁ des ersten Lambdawertes λ_{K1} und des Wertes einer zweiten Lambdaspreizung Δ λ₂ des zweiten Lambdawertes λ₂ so eingestellt wird, dass der Wert der ersten Lambdaspreizung Δ λ₁ betragsmäßig doppelt so groß ist wie der der zweiten Lambdaspreizung Δ λ₂. Die Lambdaspreizung Δ λ bezeichnet die betragsmäßige Abweichung des Lambdawertes von 1. Im vorliegenden Ausführungsbeispiel wird eine erste Lambdaspreizung Δ λ₁ von 20% (Abmagerung im Zylinder 3) und eine zweite Lambdaspreizung Δ λ₂ von 10% realisiert, so dass auch hier ein insgesamt stöchiometrischer Gesamtabgasstrom zur Verfügung steht.

Die erste Lambdaspreizung Δ λ₁ kann auch zwischen 10% und 20% bzw. 15% und 20% schwanken, d.h. es wird ein erster Lambdawert von λ_{K1} gleich 1,1 und 1,2 bzw. 1,15 und 1,2 eingestellt. Entsprechend schwankt dann die Lambdaspreizung Δ λ₂ zwischen 5% und 10% bzw. zwischen 7,5% und 10%. Das bedeutet, dass der zweite Lambdawert λ_{K2} zwischen 0,95 und 0,9 bzw. zwischen 0,925 und 0,9 schwankt.

Zum Einstellen der Lambdawerte werden die in den Speichermitteln 24 des Motorsteuergerätes 18 hinterlegten Größen und Kennfelder genutzt, die bspw. die Motorlast, den Abgasmassestrom, die Katalysatortemperatur, die Katalysatortemperaturänderungsrate, Verbrennungsaussetzerraten und Größen zur Laufunruhe berücksichtigen.

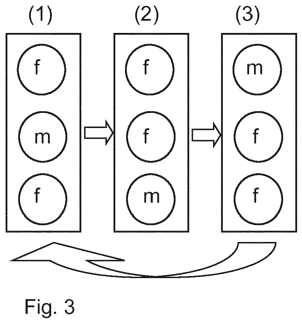

Figur 3 zeigt eine Variation des Verfahrens, bei welcher die Zylinder 3, 4, und 5 rollierend mit unterschiedlichen Lambdawerten betrieben werden. Die Figur zeigt einen Zyklus Z, in dem der Motor 1 in drei rollierenden Schritten (1-3) betrieben wird. Im Schritt (1) wird der Zylinder 3 mager betrieben und die beiden daneben liegenden Zylinder 4 und 5 fett, im zweiten Schritt wird der Zylinder 5 mager betrieben und die beiden Zylinder 4 und 3 fett, und im dritten Schritt wird der Zylinder 4 fett betrieben und die beiden Zylinder 3 und 5 fett. Bei so einer Betriebsweise werden die gegebenenfalls durch einen langfristigen Fett- bzw. Magerbetrieb hervorgerufenen unterschiedlichen Beanspruchungen der einzelnen Zylinder oder von Zylindergruppen ausgeglichen.

In einer anderen Ausführung ist es auch möglich einen solchen rollierenden Betrieb phasenweise zu betreiben, d.h. in einer längeren Betriebsphase, die mehrere Betriebszyklen des Motors umfasst wird der Motor gemäß Schritt (1) betrieben und nach einer bestimmten Zeit wird gewechselt auf den Betriebszustand in Schritt (2) bzw. den in Schritt (3).

Weitere Variationen und Abwandlungen der Erfindung entnimmt der Fachmann den Ansprüchen.

### Bezugszeichenliste

- 1: Motor
- 3, 4, 5: Zylinder
- 7, 8, 9: Abgaspfad
- 10: Turbolader
- 11: Abgaspfad
- 12: Katalysator
- 13: Abgasreinigungsanlage
- 14, 15, 16: Einblasventile
- 17: Gasrail
- 18: Motorsteuerung
- 19: Signalleitung
- 20: erste Lambdasonde
- 21: zweite Lambdasonde
- 22: Katalysatortemperaturfühler
- 23: Gasrail-/Temperaturfühler
- 24: Speicherelement

- λ_{K1}: erster Lambdawert
- λ_{K2}: zweiter Lambdawert
- λ₁: erster Abgaslambdawert
- λ₂: zweiter Abgaslambdawert
- λ_{G}: Gesamtabgaslambdawert
- Δ λ₁: erste Lambdaspreizung
- Δ λ₂: zweite Lambdaspreizung
- S1: Verfahrensschritt 1
- S2: Verfahrensschritt 2
- S3: Verfahrensschritt 3
- S3.1, S3.2: Verfahrensschritte 3.1 und 3.2
- S4: Verfahrensschritt 4 (optional)
- SN: Normalbetrieb
- Z: Zyklus

## Patentansprüche

1. Verfahren zum Betreiben einer mit Erdgas betriebenen Verbrennungskraftmaschine (1) mit einer Abgasreinigungsanlage (13), die einen Katalysator (12) umfasst, aufweisend:
Bereitstellen eines Dreizylindermotors (1) mit einem ersten und zwei zweiten Zylindern (3; 4, 5),
Einstellen eines Lambdasplits mit Einstellen eines ersten und eines zweiten Lambdawertes (λ_{K1}, λ_{K2}) eines zylinderweise zugeführten Luft-Kraftstoffgemisches über die Dosierung der Kraftstoffzufuhr,
Betreiben des Dreizylindermotors (1) in einem unsymmetrischen Lambdasplit-Betrieb und dabei
Betreiben des ersten Zylinders (3) mit einem mageren Luft-Kraftstoffgemisches, so dass ein erster Abgasstrom mit einem überstöchiometrischen ersten Abgaslambdawert (λ₁) ausgestoßen wird
Betreiben der beiden zweiten Zylinder (4, 5) mit einem fetten Luft-Kraftstoffgemisch, so dass jeweils ein zweiter Abgasstrom mit einem unterstöchiometrischen Abgaslambdawert (λ₂) ausgestoßen wird, so dass
in einem Gesamtabgasstrom Luftsauerstoff aus dem ersten Zylinder (3) und unverbrannter Kraftstoff aus den zweiten Zylindern (4, 5) in einem weitgehend stöchiometrischen Verhältnis zur Verfügung stehen, die im Katalysator (12) exotherm miteinander reagieren,
wobei das Verfahren ferner aufweist:
Rollierendem Betreiben jeweils eines der Zylinder (3, 4, 5) mit einem mageren Luft-Kraftstoffgemisch und zweier Zylinder (3, 4; 3, 5; 4, 5) mit einem fetten Luft-Kraftstoffgemisch.

2. Verfahren nach Anspruch 1 mit
Kontrollieren einer Katalysatortemperatur mittels einer kontrollierbaren Zufuhr chemisch gebundener Energie im Gesamtabgasstrom durch Einstellen des Lambdasplits mittels Variation des ersten Lambdawertes (λ_{K1}) im mageren Luft-Kraftstoffgemisch und/oder des zweiten Lambdawertes (λ_{K2}) im fetten Luft-Kraftstoffgemisch.

3. Verfahren nach Anspruch 2, wobei der erste und der zweite Lambdawert (λ_{K1}, λ_{K2}) zylinderindividuell über Einblaszeiten an Einblasventilen (14, 15, 16) steuerbar sind.

4. Verfahren nach Anspruch 1,2 oder 3 mit
Kontrollieren der Katalysatortemperatur durch intervallweises Betreiben des Dreizylindermotors (1) im Lambdasplit-Betrieb, und zeitweises Betreiben in einem Normalbetrieb ohne Lambdasplit, wobei
die Dauer und Frequenz der Betriebsintervalle im Lambdasplit-Betrieb und der Betriebsintervalle im Normalbetrieb so aufeinander abgestimmt werden, dass eine Light-Off-Temperatur der Kohlenmonoxidkonvertierung (250°C) und/oder der Methankonvertierung (500°C) im Betrieb nicht unterschritten wird.

5. Verfahren nach Anspruch 1, 2, 3 oder 4 mit
Asymmetrischem Einstellen des Lambdasplits für den ersten Zylinder (3) und die beiden zweiten Zylinder (4, 5), derart, dass der Mischlambdawert (λ_{G}) des Gesamtabgasstromes gleich 1, also stöchiometrisch ist.

6. Verfahren nach Anspruch 4 oder 5 mit
Einstellen des Wertes einer ersten Lambdaspreizung (Δ λ₁) des ersten Lambdawertes (λ_{K1}) und des Wertes einer zweiten Lambdaspreizung (Δ λ₂) des zweiten Lambdawertes (λ_{K2}), so dass der Wert der ersten Lambdaspreizung (Δ λ₁) betragsmäßig doppelt so groß ist wie der Wert der zweiten Lambdaspreizung (Δ λ₂).

7. Verfahren nach Anspruch 6, wobei der erste Lambdawert (λ_{K1}) auf einen Betrag zwischen 1,1 und 1,2, bevorzugt auf einen Betrag zwischen 1,15 und 1,2 und noch bevorzugter auf einen Betrag von 1,2 eingestellt wir und
der zweite Lambdawert (λ_{K2}) auf einen Betrag zwischen 0,95 und 0,9, bevorzugt auf einen Betrag zwischen 0,925 und 0,9 und noch bevorzugter auf einen Betrag von 0,9 eingestellt wird.

8. Verfahren nach einem der vorhergehenden Ansprüche mit
Einstellen (Vorsteuern) des ersten und zweiten Lambdawertes (λ_{K1}, λ_{K2}) in Abhängigkeit von wenigstens einer der Größen: Motorlast, Abgasmassestrom, Katalysatortemperatur, Katalysatortemperaturänderungsrate, Verbrennungsaussetzerrate, Laufunruhe.

9. Verfahren nach Anspruch 8, wobei das Einstellen des ersten und/oder zweiten Lambdawertes (λ_{K1}, λ_{K2}) auf der Grundlage wenigstens eines Kennfeldes erfolgt.

10. Verfahren nach einem der vorhergehenden Ansprüche, wobei der Mischlambdawert (λ_{G}) regelbar ist mittels einer ersten Lambdasonde (20), die in einem Einlassbereich des Katalysators (12) angeordnet ist, und/oder einer zweiten Lambdasonde (21), die in einem Auslassbereich des Katalysators (12) angeordnet ist.

11. Verfahren nach Anspruch 10, wobei die erste Lambdasonde (20) als Breitbandsonde und die zweite Lambdasonde (21) als Sprungsonde ausgebildet ist.

12. Magerlauffähiger CNG-Dreizylindermotor (1) mit einer lambdasplitfähigen Abgasreinigungsanlage (13), die einen Katalysator (12) umfasst, wobei Mittel vorgesehen sind, die dazu eingerichtet sind, den Motor (1) nach dem Verfahren nach einem der Ansprüche 1 bis 11 zu betreiben.

13. Motor (1) nach Anspruch 12, wobei der Motor (1) als Reihenmotor ausgebildet ist und der erste Zylinder (3) räumlich zwischen den beiden zweiten Zylindern (4, 5) einer zweiten Zylindergruppe angeordnet ist.

14. Motor (1) nach Anspruch 12 oder 13, wobei Abgaspfade (7, 8, 9) aus den Zylindern (3, 4, 5) in einen Abgasturbolader (10) münden, der vor dem Katalysator (12) angeordnet ist.

## Claims

1. Method for operating a combustion machine (1) operated with natural gas, having an exhaust-gas purification system (13) which comprises a catalytic converter (12), comprising:
providing a three-cylinder engine (1) with one first and two second cylinders (3; 4, 5),
setting a lambda split with setting of a first and of a second lambda value (λ_{K1}, λ_{K2}) of a cylinder-specific supplied air-fuel mixture through dosing of the fuel supply,
operating the three-cylinder engine (1) in symmetrical lambda-split operation, and in so doing
operating the first cylinder (3) with a lean air-fuel mixture, such that a first exhaust-gas flow with a superstoichiometric first exhaust-gas lambda value (λ₁) is discharged,
operating the two second cylinders (4, 5) with a rich air-fuel mixture, such that, in each case, a second exhaust-gas flow with a substoichiometric exhaust-gas lambda value (λ₂) is discharged, such that in an overall exhaust-gas flow, atmospheric oxygen from the first cylinder (3) and unburned fuel from the second cylinders (4, 5) in a substantially stoichiometric ratio are available, which react exothermically with one another in the catalytic converter (12),
wherein the method furthermore has:
rolling operation of in each case one of the cylinders (3, 4, 5) with a lean air-fuel mixture and of two cylinders (3, 4; 3, 5; 4, 5) with a rich air-fuel mixture.

2. Method according to Claim 1, comprising controlling a catalytic converter temperature by means of a controllable supply of chemically bound energy in the overall exhaust-gas flow by setting the lambda split by means of variation of the first lambda value (λ_{K1}) in the lean air-fuel mixture and/or of the second lambda value (λ_{K2}) in the rich air-fuel mixture.

3. Method according to Claim 2, wherein the first and the second lambda value (λ_{K1}, λ_{K2}) are controllable on an individual-cylinder basis by means of injection times at injection valves (14, 15, 16).

4. Method according to Claim 1, 2 or 3, comprising controlling the catalytic converter temperature by operation of the three-cylinder engine (1) at intervals in lambda-split operation and temporary operation in normal operation without lambda split, wherein
the duration and frequency of the operating intervals in lambda-split operation and of the operating intervals in normal operation are coordinated with one another such that a light-off temperature of the carbon monoxide conversion (250°C) and/or of the methane conversion (500°C) is not undershot during operation.

5. Method according to Claim 1, 2, 3 or 4, comprising asymmetrically setting the lambda split for the first cylinder (3) and the two second cylinders (4, 5) such that the mixed lambda value (λ_{G}) of the overall exhaust-gas flow is equal to 1, that is to say is stoichiometric.

6. Method according to Claim 4 or 5, comprising setting the value of a first lambda spread (Δ λ₁) of the first lambda value (λ_{K1}) and of the value of a second lambda spread (Δ λ₂) of the second lambda value (λ_{K2}) such that the value of the first lambda spread (Δ λ₁) is, in terms of magnitude, twice the value of the second lambda spread (Δ λ₂).

7. Method according to Claim 6, wherein the first lambda value (λ_{K1}) is set to a magnitude between 1.1 and 1.2, preferably to a magnitude between 1.15 and 1.2 and even more preferably to a magnitude of 1.2, and
the second lambda value (λ_{K2}) is set to a magnitude between 0.95 and 0.9, preferably to a magnitude between 0.925 and 0.9 and even more preferably to a magnitude of 0.9.

8. Method according to any of the preceding claims, comprising
setting (performing pilot control of) the first and second lambda value (λ_{K1}, λ_{K2}) in a manner dependent on at least one of the variables: engine load, exhaust-gas mass flow, catalytic converter temperature, rate of change of catalytic converter temperature, misfiring rate, running roughness.

9. Method according to Claim 8, wherein the setting of the first and/or second lambda value (λ_{K1}, λ_{K2}) is performed on the basis of at least one characteristic map.

10. Method according to any of the preceding claims, wherein the mixed lambda value (λ_{G}) is controllable in closed-loop fashion by means of a first lambda probe (20), which is arranged in an inlet region of the catalytic converter (12), and/or a second lambda probe (21), which is arranged in an outlet region of the catalytic converter (12).

11. Method according to Claim 10, wherein the first lambda probe (20) is in the form of a broadband probe and the second lambda probe (21) is in the form of a two-step probe.

12. CNG three-cylinder engine (1) with lean running capability, having an exhaust-gas purification system (13) which has lambda split capability and which comprises a catalytic converter (12), wherein means are provided which are configured to operate the engine (1) in accordance with the method according to any of Claims 1 to 11.

13. Engine (1) according to Claim 12, wherein the engine (1) is in the form of an in-line engine, and the first cylinder (3) is arranged spatially between the two second cylinders (4, 5) of a second cylinder group.

14. Engine (1) according to Claim 12 or 13, wherein exhaust-gas paths (7, 8, 9) from the cylinders (3, 4, 5) open into an exhaust-gas turbocharger (10) which is arranged upstream of the catalytic converter (12).

## Revendications

1. Procédé d'exploitation d'un moteur à combustion interne (1) fonctionnant au gaz naturel muni d'une unité de purification de gaz d'échappement (13), qui comprend un catalyseur (12), comprenant :
la mise à disposition d'un moteur à trois cylindres (1) muni d'un premier et de deux deuxièmes cylindres (3 ; 4, 5),
l'ajustement d'une fente lambda avec ajustement d'une première et d'une deuxième valeur lambda (λ_{K1}, λ_{K2}) d'un mélange air-carburant alimenté cylindre par cylindre par l'intermédiaire du dosage de l'alimentation de carburant,
l'exploitation du moteur à trois cylindres (1) dans un mode à fente lambda asymétrique et pour cela l'exploitation du premier cylindre (3) avec un mélange air-carburant pauvre, de telle sorte qu'un premier courant de gaz d'échappement ayant une première valeur lambda de gaz d'échappement sur-stœchiométrique (λ₁) soit éjecté,
l'exploitation des deux deuxièmes cylindres (4, 5) avec un mélange air-carburant riche, de telle sorte qu'un deuxième courant de gaz d'échappement ayant une valeur lambda de gaz d'échappement sous-stœchiométrique (λ₂) soit respectivement éjecté, de telle sorte que dans un courant de gaz d'échappement total, de l'oxygène de l'air issu du premier cylindre (3) et du carburant non brûlé issu des deuxièmes cylindres (4, 5) soient fournis en un rapport essentiellement stœchiométrique, qui réagissent de manière exothermique l'un avec l'autre dans le catalyseur (12),
le procédé comprenant en outre :
l'exploitation par roulement de respectivement un des cylindres (3, 4, 5) avec un mélange air-carburant pauvre et de deux cylindres (3, 4 ; 3, 5 ; 4, 5) avec un mélange air-carburant riche.

2. Procédé selon la revendication 1, comprenant :
le contrôle d'une température de catalyseur au moyen d'une alimentation contrôlable d'énergie liée chimiquement dans le courant de gaz d'échappement total par ajustement de la fente lambda au moyen d'une variation de la première valeur lambda (λ_{K1}) dans le mélange air-carburant pauvre et/ou de la deuxième valeur lambda (λ_{K2}) dans le mélange air-carburant riche.

3. Procédé selon la revendication 2, dans lequel la première et la deuxième valeur lambda (λ_{K1}, λ_{K2}) sont réglables individuellement par cylindre par l'intermédiaire de temps d'injection au niveau de soupapes d'injection (14, 15, 16).

4. Procédé selon la revendication 1, 2 ou 3, comprenant :
le contrôle de la température du catalyseur par exploitation par intervalles du moteur à trois cylindres (1) dans le mode à fente lambda, et exploitation temporaire dans un mode normal sans fente lambda,
la durée et la fréquence des intervalles d'exploitation dans le mode à fente lambda et des intervalles d'exploitation dans le mode normal étant accordées les unes aux autres de telle sorte qu'une température d'amorçage de la conversion de monoxyde de carbone (250 °C) et/ou de la conversion de méthane (500 °C) ne soit pas sous-dépassée lors de l'exploitation.

5. Procédé selon la revendication 1, 2, 3 ou 4, comprenant :
l'ajustement asymétrique de la fente lambda pour le premier cylindre (3) et les deux deuxièmes cylindres (4, 5), de telle sorte que la valeur lambda de mélange (λ_{G}) du courant de gaz d'échappement total soit égale à 1, c'est-à-dire soit stœchiométrique.

6. Procédé selon la revendication 4 ou 5, comprenant :
l'ajustement de la valeur d'un premier étalement lambda (Δ λ₁) de la première valeur lambda (λ_{K1}) et de la valeur d'un deuxième étalement lambda (Δ λ₂) de la deuxième valeur lambda (λ_{K2}), de telle sorte que la valeur du premier étalement lambda (Δ λ₁) soit deux fois plus grande en montant que la valeur du deuxième étalement lambda (Δ λ₂).

7. Procédé selon la revendication 6, dans lequel la première valeur lambda (λ_{K1}) est ajustée à un montant compris entre 1,1 et 1,2, de préférence à un montant compris entre 1,15 et 1,2, et de manière encore davantage préférée à un montant de 1,2, et
la deuxième valeur lambda (λ_{K2}) est ajustée à un montant compris entre 0,95 et 0,9, de préférence à un montant compris entre 0,925 et 0,9, et de manière encore davantage préférée à un montant de 0,9.

8. Procédé selon l'une quelconque des revendications précédentes, comprenant :
l'ajustement (réglage préliminaire) de la première et de la deuxième valeur lambda (λ_{K1}, λ_{K2}) en fonction d'au moins une des variables : charge du moteur, débit massique de gaz d'échappement, température du catalyseur, taux de modification de la température du catalyseur, taux de ratés de combustion, irrégularité de fonctionnement.

9. Procédé selon la revendication 8, dans lequel l'ajustement de la première et/ou de la deuxième valeur lambda (λ_{K1}, λ_{K2}) a lieu sur la base d'au moins un diagramme caractéristique.

10. Procédé selon l'une quelconque des revendications précédentes, dans lequel la valeur lambda de mélange (λ_{G}) peut être réglée au moyen d'une première sonde lambda (20), qui est agencée dans une zone d'entrée du catalyseur (12), et/ou d'une deuxième sonde lambda (21), qui est agencée dans une zone de sortie du catalyseur (12).

11. Procédé selon la revendication 10, dans lequel la première sonde lambda (20) est configurée sous la forme d'une sonde à large bande et la deuxième sonde lambda (21) est configurée sous la forme d'une sonde à seuil.

12. Moteur à trois cylindres CNG pouvant fonctionner avec un mélange pauvre (1), muni d'une unité de purification de gaz d'échappement apte à une fente lambda (13), qui comprend un catalyseur (12), dans lequel des moyens sont prévus, qui sont conçus pour exploiter le moteur (1) selon le procédé selon l'une quelconque des revendications 1 à 11.

13. Moteur (1) selon la revendication 12, le moteur (1) étant configuré sous la forme d'un moteur en ligne et le premier cylindre (3) étant agencé dans l'espace entre les deux deuxièmes cylindres (4, 5) d'un deuxième groupe de cylindres.

14. Moteur (1) selon la revendication 12 ou 13, dans lequel des trajectoires de gaz d'échappement (7, 8, 9) issues des cylindres (3, 4, 5) débouchent dans un turbocompresseur de gaz d'échappement (10), qui est agencé avant le catalyseur (12).
